# EUROPÄISCHE PATENTSCHRIFT

(11) **EP 2 614 337 B1**
(45) Veröffentlichungstag und Bekanntmachung des Hinweises auf die Patenterteilung: **23.10.2019**
(21) Anmeldenummer: 11741223.9
(22) Anmeldetag: 09.08.2011
(51) Int. Cl.: G01F 1/66, G01F 7/00, G01F 1/84, G01F 25/00

(54) **VERFAHREN ZUM DETEKTIEREN EINER VERSTOPFUNG IN EINEM CORIOLIS-DURCHFLUSSMESSGERÄT**
METHOD FOR DETECTING A STOPPAGE IN A CORIOLIS FLOW METER
PROCÉDÉ DE DÉTECTION D'UN ENGORGEMENT DANS UN DÉBITMÈTRE À EFFET CORIOLIS

(30) Priorität: 10.09.2010 DE 102010040600
(43) Veröffentlichungstag der Anmeldung: 17.07.2013
(73) Patentinhaber: Endress + Hauser Flowtec AG, 4153 Reinach (CH)
(72) Erfinder: ZHU, Hao, 85354 Freising (DE); DRAHM, Wolfgang, 85435 Erding (DE); RIEDER, Alfred, 84032 Landshut (DE)
(74) Vertreter: Andres, Angelika Maria
(86) Internationale Anmeldenummer: PCT/EP2011/063651
(87) Internationale Veröffentlichungsnummer: WO 2012/031842

(56) Entgegenhaltungen:
- DE-A1-102006 039 726
- JP-A- 9 178 610
- JP-A- 2009 074 571
- US-A1- 2005 132 808
- US-A1- 2008 141 789

## Beschreibung

Die vorliegende Erfindung betrifft ein Verfahren zum Detektieren einer vollständigen oder teilweisen Verstopfung eines Messrohres eines Coriolis-Durchflussmessgerätes, das in eine Rohrleitung einsetzbar ist und das einen Messwandler vom Vibrationstyp mit mindestens zwei strömungstechnisch parallel geschalteten Messrohren aufweist. Die Erfindung betrifft ferner ein entsprechend ausgebildetes Coriolis-Durchflussmessgerät.

Nach dem Coriolis-Prinzip wirkt immer dann, wenn sich in einem System eine rotierende und eine, zumindest teilweise senkrecht zu der Rotationsachse verlaufende, geradlinige Massebewegung überlagern, auf die bewegte Masse eine zusätzliche Kraft, die als Coriolis-Kraft bezeichnet wird. Dieser Effekt wird in bekannter Weise in Coriolis-Durchflussmessgeräten ausgenutzt, beispielsweise um einen Massedurchfluss eines, in einer Rohrleitung strömenden Mediums zu bestimmen. Im Einsatz werden solche Coriolis-Durchflussmessgeräte in eine, von dem jeweiligen Medium durchströmte Rohrleitung als so genannte Inline-Messgeräte eingesetzt.

Häufig werden Messwandler in Coriolis-Durchflussmessgeräten eingesetzt, die zwei, strömungstechnisch parallel geschaltete Messrohre aufweisen, auf die ein in der Rohrleitung strömendes Medium aufgeteilt wird. In der Regel werden die beiden Messrohre im Einsatz gegenphasig zueinander angeregt. Auf diese Weise gelingt eine Entkopplung des Schwingungssystems, das die zwei Messrohre aufweist, von externen Vibrationseinflüssen. Ferner kann ein Messwandler eines Coriolis-Durchflussmessgerätes auch mehr als zwei Messrohre, wie beispielsweise vier Messrohre, die strömungstechnisch parallel zueinander geschaltet sind, aufweisen. In industriellen Anwendungen kann dabei der Fall auftreten, dass bei solchen Coriolis-Durchflussmessgeräten (mindestens) eines der Messrohre vollständig oder teilweise verstopft ist. Dieser Fall tritt insbesondere dann auf, wenn ein hochviskoses, inhomogenes und/oder zur Ansatzbildung neigendes Medium in der betreffenden Rohrleitung strömt.

Solch eine Verstopfung von nur einer Teilmenge der Messrohre ist schwierig zu detektieren, da durch das mindestens eine, verbleibende, freie Messrohrweiterhin ein Durchfluss ermöglicht wird. Selbst bei vollständiger Verstopfung nur eines Messrohres ist weiterhin die Durchführung einer Coriolis-Massedurchflussmessung mit dem Coriolis-Durchflussmessgerät möglich. Eine Verstopfung eines Messrohres ist insbesondere nicht ohne weiteres anhand des bestimmten Massedurchflusswertes erkennbar. Es ist jedoch wünschenswert, eine Verstopfung eines Messrohres in Coriolis-Durchflussmessgeräten möglichst verlässlich und frühzeitig zu detektieren. Dieser Bedarf besteht insbesondere bei hygienisch kritischen Anwendungen und/oder bei Anwendungen, bei denen das in der betreffenden Rohrleitung geführte Medium wechselt und eine gegenseitige Kontamination vermieden werden sollte.

In der Druckschrift WO 2009/134268 A1 ist ein Durchflussmessgerät beschrieben, durch das eine Abweichung in einem Durchflussmessgerät-Parameter detektierbar ist. Solch eine Abweichung eines Durchflussmessgerät-Parameters kann unter anderem durch eine Verstopfung eines Messrohres ausgelöst werden. Bei einem beschriebenen Verfahren wird an einem ersten sowie an einem zweiten Messrohr des Durchflussmessgerätes die Temperatur erfasst und daraus ein Temperaturgradient ermittelt. Eine Abweichung in einem Durchflussmessgerät-Parameter wird dann detektiert, wenn der ermittelte Temperaturgradient einen Grenzwert übersteigt. Bei einem weiteren beschriebenen Verfahren wird ein Druckabfall über das Durchflussmessgerät gemessen und basierend auf dieser Messung eine erwartungsgemäße Durchflussrate berechnet. Diese erwartungsgemäße Durchflussrate wird mit einer tatsächlich in dem Durchflussmessgerät gemessenen Durchflussrate verglichen. Eine Abweichung in einem Durchflussmessgerät-Parameter wird dann detektiert, wenn die erwartungsgemäße Durchflussrate um mehr als einen Grenzwert von der gemessenen Durchflussrate abweicht.

Dementsprechend besteht die Aufgabe der vorliegenden Erfindung darin, ein Verfahren und ein Coriolis-Durchflussmessgerät bereitzustellen, durch das eine vollständige oder teilweise Verstopfung eines Messrohres des mehrere Messrohre aufweisenden Coriolis-Durchflussmessgerätes möglichst verlässlich und frühzeitig detektierbar ist.

Die Aufgabe wird durch ein Verfahren zum Detektieren einer vollständigen oder teilweisen Verstopfung eines Messrohres eines Coriolis-Durchflussmessgerätes gemäß Anspruch 1 sowie durch ein Coriolis-Durchflussmessgerät gemäß Anspruch 12 gelöst. Vorteilhafte Weiterbildungen der Erfindung sind in den Unteransprüchen angegeben.

Gemäß der vorliegenden Erfindung wird ein Verfahren zum Detektieren einer vollständigen oder teilweisen Verstopfung eines Messrohres eines Coriolis-Durchflussmessgerätes bereitgestellt, wobei das Coriolis-Durchflussmessgerät in eine Rohrleitung einsetzbar ist und einen Messwandler vom Vibrationstyp mit mindestens zwei strömungstechnisch parallel geschalteten Messrohren aufweist. Dabei wird das Coriolis-Durchflussmessgerät von Medium durchströmt und durch das Coriolis-Durchflussmessgerät wird im Rahmen einer Coriolis-Massedurchflussmessung ein Gesamt-Massedurchfluss des Mediums durch das Coriolis-Durchflussmessgerät bestimmt. Das Verfahren weist nachfolgende Schritte auf:
A) Messen einer in einer Teilmenge der Messrohre auftretenden Teilmengen-Strömung;
B) Vergleichen eines aus dieser Messung erhaltenen Teilmengen-Strömungswertes mit einem für diese Teilmenge zu erwartenden Referenzwert, der aus dem im Rahmen der Coriolis-Massedurchflussmessung bestimmten Gesamt-Massedurchfluss bestimmt wird; und
C) Detektieren einer Verstopfung mindestens eines Messrohres des Messwandlers, falls der Teilmengen-Strömungswert um mehr als einen Grenzwert von dem Referenzwert abweicht.

Wie oberhalb erläutert wird, kann alleine anhand des bestimmten Gesamt-Massedurchflusses durch das Coriolis-Durchflussmessgerät oftmals eine Verstopfung eines Messrohres, solange mindestens ein weiteres Messrohr noch einen Durchfluss ermöglicht, nicht detektiert werden. Folge einer vollständigen oder teilweisen Verstopfung mindestens eines Messrohres ist jedoch, dass in den verschiedenen Messrohren unterschiedlich starke Strömungen (insbesondere unterschiedliche Durchflussraten bezogen auf den jeweiligen freien Querschnitt der Messrohre) auftreten. Durch das erfindungsgemäße Verfahren wird solch ein Auftreten von unterschiedlich starken Strömungen innerhalb der einzelnen Messrohre festgestellt. Indem zusätzlich zu der (bei Coriolis-Durchflussmessgeräten üblichen) Bestimmung des Gesamt-Massedurchflusses noch eine in einer Teilmenge der Messrohre auftretenden Teilmengen-Strömung gemessen wird, kann ein aus dieser Messung erhaltener Teilmengen-Strömungswert mit einem für diese Teilmenge zu erwartenden Referenzwert, der aus dem im Rahmen der Coriolis-Massedurchflussmessung bestimmten Gesamt-Massedurchfluss bestimmt wird, verglichen werden. Weicht der Teilmengen-Strömungswert deutlich von dem zu erwartenden Referenzwert ab (d.h. um mehr als einen Grenzwert), so deutet dies darauf hin, dass eine durch eine Verstopfung mindestens eines Messrohres bedingte ungleiche Verteilung der Strömung auf die Messrohre vorliegt. Das erfindungsgemäße Verfahren ermöglicht dementsprechend, eine vollständige oder teilweise Verstopfung mindestens eines Messrohres auf zuverlässige und einfache Weise zu detektieren.

In dem Zusammenhang mit der vorliegenden Erfindung wird teilweise erwähnt, dass "mindestens ein" Bauteil vorgesehen ist. Bei diesen Bauteilen wird auch bei den weiteren Ausführungen auf die Möglichkeit der Vorsehung von mehr als einem Bauteil Bezug genommen, auch wenn dies nicht jedesmal explizit erwähnt wird.

Das erfindungsgemäße Verfahren betrifft ein Coriolis-Durchflussmessgerät mit einem Messwandler vom Vibrationstyp. Ein Messwandler vom Vibrationstyp dient dabei allgemein dazu, in einem hindurchströmenden Medium mechanische Reaktionskräfte, z.B. massedurchflussabhängige Coriolis-Kräfte, dichteabhängige Trägheitskräfte und/oder viskositätsabhängige Reibungskräfte, zu erzeugen. Diese mechanischen Reaktionskräfte wiederum sind sensorisch erfassbar. Eine typische Betriebsweise solch eines Coriolis-Durchflussmessgerätes wird nachfolgend beschrieben: Es werden sämtliche (hier: mindestens zwei) Messrohre zu mechanischen Schwingungen durch mindestens einen Erreger angeregt. Hierbei kann insbesondere der Grundmodus der Biegeschwingungen angeregt werden. Ferner werden die mechanischen Schwingungen der Messrohre durch mindestens einen (in der Regel durch mindestens zwei, entlang der Erstreckungsrichtung der Messrohre beabstandete) Schwingungs-Sensor(en) erfasst. Die von dem mindestens einen Schwingungs-Sensor bereitgestellten Messsignale werden durch eine Elektronik des Coriolis-Durchflussmessgerätes ausgewertet. Die Ansteuerung des Erregers erfolgt in der Regel ebenfalls durch die Elektronik.

Der Gesamt-Massedurchfluss durch das Coriolis-Durchflussmessgerät kann beispielsweise, wie nachfolgend erläutert wird, im Rahmen einer Coriolis-Massedurchflussmessung bestimmt werden. Werden die Messrohre nicht von Medium durchströmt, so schwingen sie bei Anregung zu mechanischen Schwingungen in Phase (entlang ihrer jeweiligen Erstreckungsrichtung). Werden die Messrohre von einem Medium durchströmt (mit einer Strömungsgeschwindigkeit größer als Null), so führt dies dazu, dass die Messrohre aufgrund der auf das strömende Medium wirkenden Coriolis-Kraft zusätzlich (entlang ihrer Erstreckungsrichtung) verformt werden. Diese, entlang der Erstreckungsrichtung der Messrohre auftretende Phasenverschiebung kann durch den mindestens einen Schwingungs-Sensor erfasst werden. Beispielsweise können mindestens zwei, entlang der Erstreckungsrichtung der Messrohre voneinander beabstandet angeordnete Schwingungs-Sensoren vorgesehen sein, die jeweils den Abstand zwischen zwei, im Wesentlichen gegenphasig zueinander schwingenden Messrohren erfassen. Die entlang der Erstreckungsrichtung der Messrohre auftretende Phasenverschiebung ist proportional zu dem Gesamt-Massedurchfluss durch das Coriolis-Durchflussmessgerät. Je nach Ausbildung des Coriolis-Durchflussmessgerätes kann/können durch dieses zusätzlich auch eine Dichte und/oder eine Viskosität des strömenden Mediums bestimmt werden. Zur Bestimmung der Dichte des Mediums wird das Prinzip ausgenutzt, dass die Resonanzfrequenz (beispielsweise des Grundmodus der Biegeschwingung) von der schwingenden Masse und damit von der Dichte des strömenden Mediums abhängt. Gemäß einer Weiterbildung weist das Coriolis-Durchflussmessgerät zwei Messrohre auf, die spiegelsymmetrisch zueinander relativ zu einer Symmetrieebene, die sich zwischen den beiden Messrohren erstreckt, verlaufen. Auch im Übrigen sind die beiden Messrohre vorzugsweise spiegelsymmetrisch zueinander ausgebildet, insbesondere weisen sie den gleichen (freien) Strömungsquerschnitt auf.

Unter einer "vollständigen Verstopfung" eines Messrohres wird ein Zustand verstanden, in dem kein Durchfluss mehr durch das betreffende Messrohr ermöglicht wird. Unter einer "teilweisen Verstopfung" eines Messrohres wird ein Zustand verstanden, in dem der Durchfluss durch das betreffende Messrohr reduziert ist. Eine teilweise Verstopfung kann beispielsweise durch eine Schichtbildung oder durch Ablagerungen des Mediums innerhalb des betreffenden Messrohres gebildet werden. Wird in dem vorliegenden Zusammenhang allgemein auf eine "Verstopfung" Bezug genommen, so wird dabei sowohl auf die Möglichkeit einer vollständigen wie auch einer teilweisen Verstopfung Bezug genommen.

Das "Medium" kann vollständig oder auch nur teilweise durch eine Flüssigkeit, ein Gas oder eine Mischung aus Flüssigkeit und Gas gebildet werden. Die Flüssigkeit, das Gas oder die Mischung aus Flüssigkeit und Gas kann insbesondere auch Feststoffteile (beispielsweise pneumatisch geförderter Staub, Feststoffteile in Gas, Feststoffteile in Flüssigkeit, etc.) mitführen.

Die "Teilmenge der Messrohre" wird gemäß einer Weiterbildung durch genau ein Messrohr gebildet. Bei der nachfolgenden Beschreibung, insbesondere bei Nennung "mindestens eines Messrohres, welches die Teilmenge bildet" wird jeweils auch auf diese Variante Bezug genommen, selbst wenn dies nicht jedesmal explizit erwähnt wird. Insbesondere ist gemäß einer Weiterbildung vorgesehen, dass die "Teilmenge der Messrohre" durch genau ein Messrohr gebildet wird und dass das Coriolis-Durchflussmessgerät insgesamt zwei Messrohre aufweist. Alternativ kann die "Teilmenge der Messrohre" aber auch durch mehrere Messrohre einer noch größeren Anzahl von Messrohren des Coriolis-Durchflussmessgerätes gebildet werden. Beispielsweise kann die Teilmenge der Messrohre auch durch zwei Messrohre gebildet werden, während das Coriolis-Durchflussmessgerät insgesamt vier Messrohre aufweist. Ferner kann auch, wie unterhalb am Beispiel einer Weiterbildung erläutert wird, im Voraus nicht festgelegt sein, welches Messrohr bzw. welche Messrohre die "Teilmenge der Messrohre", an der der Schritt des Messens (Schritt A)) durchgeführt wird, bildet.

Bei dem Schritt des "Messens" (Schritt A)) wird eine Messgröße, die charakteristisch für die in der Teilmenge der Messrohre auftretende Strömung (Teilmengen-Strömung) ist, gemessen. Diese Messgröße kann, je nach Art des Messverfahrens und je nach Ausgestaltung des Schrittes des Vergleichens, beispielsweise durch einen Massedurchfluss des Mediums durch die Teilmenge der Messrohre, eine Strömungsgeschwindigkeit des Mediums durch das mindestens eine, die Teilmenge bildende Messrohr, einen Volumendurchfluss des Mediums durch die Teilmenge der Messrohre, eine Zeitdauer, die eine lokalisierte Verunreinigung für das Passieren durch ein Messrohr benötigt, etc., gebildet werden. Der Schritt des Messens (Schritt A)) erfolgt gemäß einer Weiterbildung unmittelbar an oder in dem mindestens einen Messrohr, welches die Teilmenge bildet. Alternativ kann die Teilmengen-Strömung auch in unmittelbarer Nähe des mindestens einen Messrohres, welches die Teilmenge bildet, gemessen werden. Falls die Teilmenge der Messrohre durch mehr als ein Messrohr gebildet wird, muss nicht zwingend für jedes dieser Messrohre die Strömung separat gemessen werden. Vielmehr kann auch die Gesamtströmung durch diese Teilmenge der Messrohre gemessen werden. Dies wäre beispielsweise bei einer Coriolis-Massedurchflussmessung in zwei Messrohren zur Bestimmung eines Massedurchflusses durch diese zwei Messrohre bei einem Coriolis-Durchflussmessgerät, das insgesamt vier Messrohre aufweist, der Fall.

Der "Teilmengen-Strömungswert", der bei dem Schritt des "Vergleichens" (Schritt B)) herangezogen wird, muss nicht zwingend identisch zu der bei dem Schritt des "Messens" (Schritt A)) erfassten Messgröße sein. Der Teilmengen-Strömungswert kann insbesondere durch eine aus der erfassten Messgröße abgeleitete Größe, wie beispielsweise durch einen aus der Strömungsgeschwindigkeit des Mediums durch ein Messrohr abgeleiteten Massedurchfluss durch dieses Messrohr, gebildet werden. Der Teilmengen-Strömungswert ist dabei ebenfalls charakteristisch für die in der Teilmenge der Messrohre auftretende Strömung (Teilmengen-Strömung).

Der "für diese Teilmenge zu erwartende Referenzwert" wird insbesondere aus dem bestimmten Gesamt-Massedurchfluss unter Heranziehung des Verhältnisses des freien (d.h. ohne Berücksichtigung einer gegebenenfalls vorhandenen Verstopfung) Strömungsquerschnittes der Teilmenge der Messrohre zu dem freien Strömungsquerschnitt sämtlicher Messrohre bestimmt. Weisen die Messrohre jeweils einen identischen, freien Strömungsquerschnitt auf, so kann dieses Verhältnis einfach durch die Anzahl der Teilmenge zu der Gesamtanzahl der Messrohre gebildet werden. Der "für diese Teilmenge zu erwartende Referenzwert" muss dabei nicht zwingend durch einen für diese Teilmenge zu erwartenden Massedurchfluss gebildet werden. Vielmehr kann dieser Referenzwert durch eine aus dem Massedurchfluss abgeleitete Größe gebildet werden. Der Referenzwert ist dabei charakteristisch für die in der Teilmenge der Messrohre basierend auf dem Gesamt-Massedurchfluss zu erwartende Strömung.

Für den Teilmengen-Strömungswert sowie für den Referenzwert werden insbesondere direkt miteinander vergleichbare physikalische Größen verwendet. In entsprechender Weise können bei dem Schritt des Vergleichens (Schritt B)) auch andere Größen, die durch Umformen mathematischer Gleichungen erhältlich sind, als Teilmengen-Strömungswert und als Referenzwert verwendet werden.

Die Coriolis-Massedurchflussmessung (zur Bestimmung des Gesamt-Massedurchflusses) kann dabei parallel oder auch zeitlich (um einen kurzen Zeitabschnitt) versetzt zu dem Schritt des Messens (Schritt A)) durchgeführt werden. Einige Messverfahren zur Erfassung der Teilmengen-Strömung lassen eine parallele (d.h. zeitgleiche) Durchführung der Coriolis-Massedurchflussmessung zur Bestimmung des Gesamt-Massedurchflusses zu.

Der Grenzwert kann insbesondere ein in dem Coriolis-Durchflussmessgerät gespeicherter Grenzwert sein. Dabei kann es sich um einen festen Wert handeln. Alternativ kann der Grenzwert auch in Abhängigkeit von anderen Größen, wie beispielsweise von einem tatsächlichen Gesamt-Massedurchfluss des Mediums durch das Coriolis-Durchflussmessgerät, von dem Medium selbst und/oder von der jeweiligen Anwendung, etc., bestimmt werden. Der Grenzwert kann auch durch einen Benutzer, je nach gewünschter Empfindlichkeit, einstellbar sein.

Falls bei Schritt C) eine Verstopfung mindestens eines Messrohres des Messwandlers detektiert wird, kann dies beispielsweise an einen Benutzer (z.B. über eine Vorort-Anzeige an dem Coriolis-Durchflussmessgerät) und/oder an eine übergeordnete, über ein Netzwerk verbundene Steuereinheit, die eine Prozesssteuerung und/oder eine Überwachung mehrerer, in Kommunikationsverbindung stehender Feldgeräte ausführt, signalisiert werden.

Das Verfahren ist unabhängig von der jeweiligen Form und Anzahl (mindestens zwei) der Messrohre und dem jeweils angeregten Schwingungsmodus durchführbar. Gemäß einer Weiterbildung ist vorgesehen, dass das erfindungsgemäße Verfahren periodisch, insbesondere in vorbestimmten Zeitabständen, durchgeführt wird. Beispielsweise wird das Verfahren automatisch durch die Elektronik nach Ablauf einer vorbestimmten Zeitdauer gestartet.

Gemäß einer Weiterbildung weist das Verfahren nachfolgende(n) Schritt(e) auf:
D) Detektieren einer Verstopfung innerhalb der Teilmenge der Messrohre, wenn der Teilmengen-Strömungswert von dem Referenzwert derart abweicht, dass in der Teilmenge eine (gegenüber einem erwartungsgemäßen Teilmengen-Strömungswert) reduzierte Teilmengen-Strömung vorliegt; und/oder
E) Detektieren einer Verstopfung mindestens eines, in der Teilmenge der Messrohre nicht enthaltenen Messrohres des Coriolis-Durchflussmessgerätes, wenn der Teilmengen-Strömungswert von dem Referenzwert derart abweicht, dass in der Teilmenge eine (gegenüber einem erwartungsgemäßen Teilmengen-Strömungswert) erhöhte Teilmengen-Strömung vorliegt.

Bei dieser Weiterbildung wird folglich in Abhängigkeit von der Richtung der Abweichung zwischen dem Teilmengen-Strömungswert und dem zu erwartenden Referenzwert bestimmt, ob innerhalb der Teilmenge (mindestens) ein Messrohr verstopft ist oder ob mindestens ein Messrohr des/der verbleibenden Messrohre(s) verstopft ist. Wird die Teilmenge durch genau ein Messrohr gebildet, so wird bei Schritt D eine Verstopfung dieses Messrohres detektiert. Wird die Teilmenge durch genau ein Messrohr gebildet und weist das Coriolis-Durchflussmessgerät insgesamt zwei Messrohre auf, so wird bei Schritt E eine Verstopfung des anderen, nicht die Teilmenge bildenden Messrohres detektiert.

Gemäß einer Weiterbildung wird bei dem Schritt des Messens (Schritt A)) eine Strömungsgeschwindigkeit des Mediums in der Teilmenge der Messrohre erfasst. Die für den Schritt des Vergleichens (Schritt B)) erforderliche Beziehung zwischen der Strömungsgeschwindigkeit und dem Massedurchfluss kann unter Heranziehung des Verhältnisses des freien Strömungsquerschnittes (d.h. ohne Berücksichtigung einer gegebenenfalls vorhandenen Verstopfung) der Teilmenge der Messrohre zu dem freien Strömungsquerschnitt sämtlicher Messrohre sowie der (bekannten) Dichte des Mediums hergestellt werden. Wird die Teilmenge der Messrohre durch genau ein Messrohr gebildet, so wird insbesondere die Strömungsgeschwindigkeit der Strömung innerhalb dieses Messrohres erfasst. Wird die Teilmenge der Messrohre durch mehrere Messrohre gebildet, so wird insbesondere in jedem der Messrohre der Teilmenge die Strömungsgeschwindigkeit erfasst und daraus ein für den Schritt des Vergleichens heranzuziehender Teilmengen-Strömungswert bestimmt.

Gemäß einer Weiterbildung wird bei dem Schritt des Messens (Schritt A)) die Zeit erfasst, über welche eine, ein Messrohr passierende, lokalisierte Verunreinigung eine Störung in einem, durch das Coriolis-Durchflussmessgerät erfassten Messsignal hervorruft. Eine lokalisierte Verunreinigung wird beispielsweise durch eine in Flüssigkeit mitgeführte Gasblase oder durch einen in Flüssigkeit und/oder Gas mitgeführten Festkörper gebildet. Die erfasste Zeitdauer ist umgekehrt proportional zu der Strömungsgeschwindigkeit der lokalisierten Verunreinigung in dem betreffenden Messrohr. Durch diese Erfassung wird folglich ein Maß für die Strömungsgeschwindigkeit des Mediums innerhalb des Messrohres, durch welches die lokalisierte Verunreinigung passiert, bestimmt. Dabei wird die Tatsache ausgenutzt, dass während der Zeit, in der eine lokalisierte Verunreinigung das Coriolis-Durchflussmessgerät passiert, eine Störung in einem, durch das Coriolis-Durchflussmessgerät erfassten Messsignal hervorgerufen wird. Diese Störung ist insbesondere durch den Dichteunterschied zwischen der lokalisierten Verunreinigung und dem Medium bedingt.

Das Messsignal des Coriolis-Durchflussmessgerätes, welches bezüglich der Zeiterfassung von solch einer Störung herangezogen wird, wird insbesondere durch ein in dem Coriolis-Durchflussmessgerät gemessenes und/oder bearbeitetes Messsignal gebildet. Das Messsignal wird insbesondere durch ein im Rahmen der Coriolis-Massedurchflussmessung des Gesamt-Massedurchflusses, im Rahmen einer Dichtemessung des Mediums und/oder im Rahmen einer Viskositätsmessung des Mediums gemessenes oder in dem Coriolis-Durchflussmessgerät verarbeitetes Messsignal gebildet. Beispielsweise wird das Messsignal durch einen in dem Coriolis-Durchflussmessgerät bestimmten Gesamt-Massedurchfluss, eine in dem Coriolis-Durchflussmessgerät über die Zeit aufintegrierte Masse, eine in dem Coriolis-Durchflussmessgerät bestimmte Resonanzfrequenz oder durch eine in dem Coriolis-Durchflussmessgerät bestimmte Dämpfung, etc. gebildet. Wie in dem Fachgebiet bekannt ist, wird durch die Dämpfung ein Verhältnis einer Anregungs-Eingangsgröße, welche ein Maß für die Anregung der Messrohre durch den mindestens einen Erreger ist, zu einer Sensor-Ansprechgröße, welche ein Maß für die durch die Anregung ausgelöste Schwingung ist, angegeben. Insbesondere wird die Dämpfung durch das Verhältnis eines an den Erreger gelieferten Anregungsstroms zu der Amplitude der Auslenkung des Schwingungs-Sensors angegeben.

Zu welchem Zeitpunkt und durch welches Messrohr des Coriolis-Durchflussmessgerätes eine lokalisierte Verunreinigung passiert, kann in der Regel nicht beeinflusst werden. Vorzugsweise weist die Elektronik des Coriolis-Durchflussmessgerätes einen Erkennungsmechanismus auf, durch den das Passieren einer lokalisierten Verunreinigung automatisch erkannt wird und die Messung der Zeit, über welche die Verunreinigung eine Störung in einem, durch das Coriolis-Durchflussmessgerät erfassten Messsignal hervorruft, automatisch gestartet wird.

Die lokalisierte Verunreinigung hat bei Passieren eines Messrohres nicht zwingend die gleiche Strömungsgeschwindigkeit wie das Medium innerhalb dieses Messrohres. Die Strömungsgeschwindigkeit der lokalisierten Verunreinigung wird abgesehen von der Strömungsgeschwindigkeit des Mediums innerhalb des Messrohres insbesondere durch den Dichteunterschied zwischen dem Medium und der lokalisierten Verunreinigung sowie durch die Ausrichtung und Form der jeweiligen Messrohre beeinflusst.

Gemäß einer Weiterbildung sind in dem Coriolis-Durchflussmessgerät für verschiedene Gesamt-Massedurchflusswerte entsprechende Zeitdauern hinterlegt, über welche eine, ein Messrohr passierende, lokalisierte Verunreinigung eine Störung in einem, durch das Coriolis-Durchflussmessgerät erfassten Messsignal bei vollständig freier Messrohranordnung hervorruft. Bei dem Schritt des Vergleichens (Schritt B)) wird als der zu erwartende Referenzwert die hinterlegte Zeitdauer verwendet, die dem durch das Coriolis-Durchflussmessgerät bestimmten Gesamt-Massedurchfluss des Mediums entspricht. Die hinterlegten Zeitdauern können beispielsweise im Voraus im Experiment mit dem betreffenden Medium und mit entsprechenden, darin auftretenden, lokalisierten Verunreinigungen bestimmt werden. In entsprechender Weise kann auch der für den Schritt des Detektierens (Schritt C)) heranzuziehende Grenzwert im Voraus im Experiment bestimmt werden.

Gemäß einer Weiterbildung wird bei dem Schritt des Messens bei einer Teilmenge der Messrohre eine Coriolis-Massedurchflussmessung durchgeführt und als Teilmengen-Strömung ein Massedurchfluss des Mediums durch diese Teilmenge der Messrohre gemessen. Für diese Teilmenge der Messrohre, die insbesondere durch genau eines oder durch zwei Messrohre gebildet wird, kann ein separates Coriolis-Massedurchflussmesssystem (bzw. eine separate Messanordnung) vorgesehen sein. Gegebenenfalls können aber auch Teile des Coriolis-Massedurchflussmesssystems (bzw. der Messanordnung), durch das ein Gesamt-Massedurchfluss durch das Coriolis-Durchflussmessgerät bestimmt wird, mit genutzt werden.

Gemäß einer Weiterbildung wird bei dem Schritt des Messens (Schritt A)) durch ein Ultraschall-Messverfahren innerhalb von mindestens einem Messrohr die Strömungsgeschwindigkeit des Mediums gemessen. Dabei können insbesondere die aus dem Stand der Technik bekannten Ultraschall-Messverfahren und Messanordnungen eingesetzt werden.

Alternativ können zum Messen der in einer Teilmenge der Messrohre auftretenden Teilmengen-Strömung (vgl. Schritt A)) auch alternative Messverfahren eingesetzt werden. Beispielsweise kann auch mindestens ein biegbares, in die Strömung ragendes Element eingesetzt werden, das aufgrund der Strömung des Mediums verbogen wird und bei dem die Stärke der Verbiegung erfasst wird. Solch ein Element kann in einem Messrohr oder direkt stromaufwärts von der betreffenden Teilmenge der Messrohre angeordnet sein.

Gemäß einer Weiterbildung werden die Schritte des Messens (Schritt A)), des Vergleichens (Schritt B)) und des Detektierens (Schritt C)) in dem Coriolis-Durchflussmessgerät durchgeführt. Hierzu ist in dem Coriolis-Durchflussmessgerät insbesondere eine entsprechend ausgebildete Elektronik vorgesehen. Grundsätzlich ist aber auch möglich, dass Teile des erfindungsgemäßen Verfahrens in einer übergeordneten Steuereinheit, die über ein Netzwerk mit dem Coriolis-Durchflussmessgerät in Kommunikationsverbindung steht, durchgeführt werden oder von dieser Steuereinheit aus gesteuert werden.

Gemäß einer Weiterbildung werden die Schritte des Messens (Schritt A)), des Vergleichens (Schritt B)) und des Detektierens (Schritt C)) parallel zu einer in dem Coriolis-Durchflussmessgerät durchgeführten Durchflussmessung des Gesamtdurchflusses des Mediums durch das Coriolis-Durchflussmessgerät durchgeführt. Eine Durchflussmessung muss folglich nicht für die Durchführung des erfindungsgemäßen Detektionsverfahrens unterbrochen werden. Die Durchflussmessung des Gesamtdurchflusses wird insbesondere durch eine Coriolis-Massedurchflussmessung des Gesamt-Massedurchflusses des Mediums durch das Coriolis-Durchflussmessgerät gebildet. Die Durchflussmessung des Gesamtdurchflusses kann auch durch eine Dichtemessung und/oder eine Viskositätsmessung gebildet werden. Wie bereits oberhalb erläutert wird, ist nicht zwingend erforderlich, dass der für die Bestimmung des zu erwartenden Referenzwertes erforderliche Gesamt-Massedurchfluss genau zeitgleich mit der Messung der Teilmengen-Strömung erfolgt. Eine zeitgleiche oder zeitnahe Erfassung des Gesamt-Massedurchflusses und der Teilmengen-Strömung ist jedoch im Hinblick auf die Vermeidung von zusätzlichen Effekten aufgrund von zeitlichen Änderungen vorteilhaft.

Gemäß einer Weiterbildung wird in dem Fall, in dem eine Verstopfung mindestens eines Messrohres des Messwandlers detektiert wird, diese Verstopfung an einen Benutzer und/oder an eine mit dem Coriolis-Durchflussmessgerät in Kommunikationsverbindung stehende Steuereinheit signalisiert. Eine Signalisierung an einen Benutzer kann beispielsweise über eine Vorort-Anzeige des Coriolis-Durchflussmessgerätes und/oder über einen Signalton des Coriolis-Durchflussmessgerätes erfolgen. Die Steuereinheit steht in Anlagen der Prozessautomatisierungstechnik in der Regel über ein Netzwerk (z.B. ein Feldbus-Netzwerk) mit dem Coriolis-Durchflussmessgerät (und in der Regel auch mit weiteren Feldgeräten) in Kommunikationsverbindung. Die Steuereinheit kann dabei beispielsweise in Bezug auf die ihr zugeordneten Feldgeräte eine Prozesssteuerung und/oder Prozessüberwachung durchführen.

Die vorliegende Erfindung betrifft ferner ein Coriolis-Durchflussmessgerät, das in eine Rohrleitung einsetzbar ist, das einen Messwandler vom Vibrationstyp mit mindestens zwei strömungstechnisch parallel geschalteten Messrohren aufweist und das derart ausgebildet ist, dass durch dieses im Rahmen einer Coriolis-Massedurchflussmessung ein Gesamt-Massedurchfluss eines, in der Rohrleitung strömenden Mediums bestimmbar ist. Ferner ist durch das Coriolis-Durchflussmessgerät eine in einer Teilmenge der Messrohre auftretende Teilmengen-Strömung messbar. Eine Elektronik des Coriolis-Durchflussmessgerätes ist derart ausgebildet, dass durch die Elektronik ein aus dieser Messung erhaltener Teilmengen-Strömungswert mit einem für diese Teilmenge zu erwartenden Referenzwert, der aus dem über die Coriolis-Durchflussmessung bestimmten Gesamt-Massedurchfluss bestimmt wird, vergleichbar ist und dass durch die Elektronik eine Verstopfung mindestens eines Messrohres des Messwandlers detektierbar ist, falls der Teilmengen-Strömungswert um mehr als einen Grenzwert von dem Referenzwert abweicht.

Die oberhalb in Bezug auf das erfindungsgemäße Verfahren erläuterten Weiterbildungen und Varianten sind in entsprechender Weise auch in dem erfindungsgemäßen Coriolis-Durchflussmessgerät realisierbar. Bei den oberhalb erläuterten Verfahrensschritten ist, soweit dies technisch möglich ist, insbesondere die Elektronik des Coriolis-Durchflussmessgerätes zur Ausführung des entsprechenden Schrittes und/oder zur Ansteuerung einer entsprechenden Funktionseinheit (des Coriolis-Durchflussmessgerätes) zur Durchführung des Schrittes ausgebildet. Die Elektronik kann dabei digital und/oder analog arbeiten.

Gemäß einer Weiterbildung weist das Coriolis-Durchflussmessgerät neben einem Coriolis-Massedurchflussmesssystem (bzw. einer Coriolis-Massedurchflussmessanordnung) zur Messung des Gesamt-Massedurchflusses des in der Rohrleitung strömenden Mediums ein zweites Messsystem (bzw. eine zweite Messanordnung) zum Messen der in der Teilmenge der Messrohre auftretenden Teilmengen-Strömung auf. Gemäß einer Weiterbildung weist das zweite Messsystem mindestens eines der nachfolgenden Messsysteme auf: ein Coriolis-Massedurchflussmesssystem zur Messung des Massedurchflusses des Mediums in der Teilmenge der Messrohre; und/oder ein Ultraschall-Messsystem zur Messung der Strömungsgeschwindigkeit des Mediums innerhalb eines Messrohres. Wie oberhalb erläutert wird, kann das zweite Messsystem aber auch durch ein anderweitiges Messsystem, durch das eine in einer Teilmenge der Messrohre auftretende Teilmengen-Strömung erfassbar ist, gebildet werden.

Weitere Vorteile und Zweckmäßigkeiten der Erfindung ergeben sich anhand der nachfolgenden Beschreibung von Ausführungsformen unter Bezugnahme auf die beigefügten Figuren. Von den Figuren zeigen:
- Fig. 1:: eine schematische Darstellung eines Coriolis-Durchflussmessgerätes in perspektivischer Ansicht mit teilweise abgenommenem Gehäuse zur Veranschaulichung einer Ausführungsform der vorliegenden Erfindung;
- Fig. 2:: eine Seitenansicht des in Fig. 1 dargestellten Coriolis-Durchflussmessgerätes mit teilweise abgenommenem Gehäuse;
- Fig. 3a:: eine graphische Auftragung eines durch ein Coriolis-Durchflussmessgerät erfassten, zeitabhängigen Massedurchflusses zur Veranschaulichung einer durch eine lokalisierte Verunreinigung hervorgerufenen Störung in einem Zustand, bei dem sämtliche Messrohre frei sind;
- Fig. 3b:: eine graphische Auftragung eines durch ein Coriolis-Durchflussmessgerät erfassten, zeitabhängigen Massedurchflusses zur Veranschaulichung einer durch eine lokalisierte Verunreinigung hervorgerufenen Störung in einem Zustand, bei dem ein Messrohr verstopft ist; und
- Fig. 4:: eine schematische, graphische Auftragung einer durch ein Coriolis-Durchflussmessgerät erfassten, aufintegrierten Masse und einer Dämpfung zur Veranschaulichung einer durch eine lokalisierte Verunreinigung hervorgerufenen Störung.

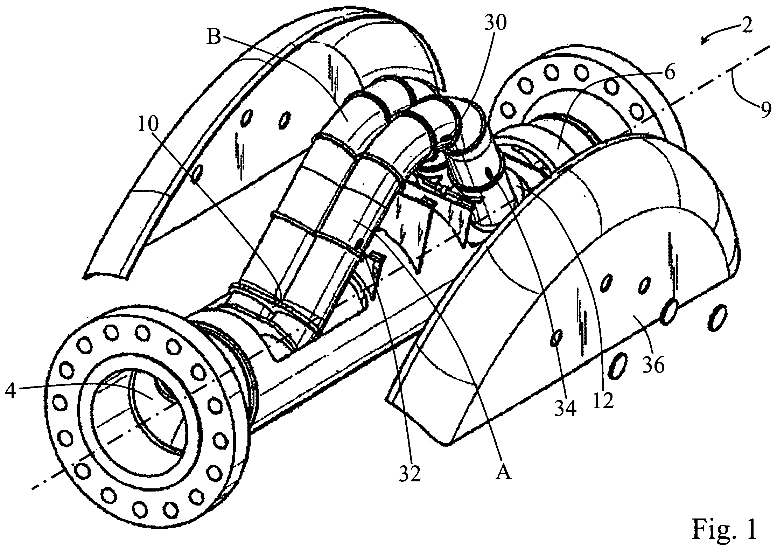

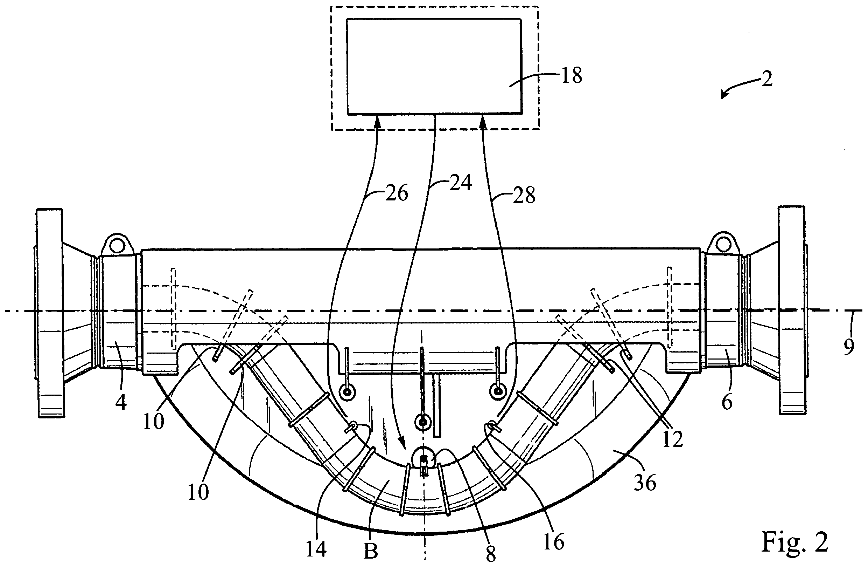

In den Figuren 1 und 2 ist beispielhaft ein Coriolis-Durchflussmessgerät 2 dargestellt, das zur Durchführung des erfindungsgemäßen Detektionsverfahrens ausgebildet ist. Das Coriolis-Durchflussmessgerät 2 weist zwei schwingungsfähig gehalterte Messrohre A und B auf, die jeweils bogenförmig ausgebildet sind und parallel zueinander verlaufen. Das Coriolis-Durchflussmessgerät 2 ist dabei derart in eine (nicht dargestellte) Rohrleitung einsetzbar, dass die beiden Messrohre A und B von dem in der Rohrleitung strömenden Medium durchströmt werden. Hierzu weist das Coriolis-Durchflussmessgerät 2 eingangsseitig einen Strömungsteiler 4 auf, durch den das Medium auf die beiden Messrohre A und B aufgeteilt wird. Ausgangsseitig ist in entsprechender Weise ein Strömungsteiler 6 vorgesehen, durch den das aus den beiden Messrohren A und B austretende Medium wieder zusammengeführt und zu einem Auslass des Coriolis-Durchflussmessgerätes 2 geleitet wird.

Zwischen den beiden Messrohren A und B erstreckt sich ein Erreger 8, der in dem vorliegenden Ausführungsbeispiel durch einen elektrodynamischen Erreger 8 gebildet wird. Der Erreger 8 ist bei dem vorliegenden Ausführungsbeispiel an einem Umkehrpunkt des Bogens, der jeweils durch die beiden Messrohre A und B gebildet wird, angeordnet. Der Erreger 8 ist derart ausgebildet, dass durch Anlegen einer elektrischen Anregungsspannung seine Länge verändert wird. Durch Anlegen einer entsprechenden, periodischen elektrischen Anregungsspannung an den Erreger 8 können die beiden Messrohre A und B periodisch auseinandergedrückt und/oder zusammengezogen werden, so dass sie Biegeschwingungen ausführen. Dabei werden die beiden Messrohre A und B gegenphasig zueinander angeregt und führen jeweils eine (zueinander gegenphasige) Schwenkbewegung um eine Längsachse 9 des Coriolis-Durchflussmessgerätes 2 aus. Die beiden Messrohre A und B sind ferner eingangsseitig und ausgangsseitig durch entsprechende Koppelelemente 10, 12 mechanisch aneinander gekoppelt.

Zwischen den beiden Messrohren A und B, jeweils an einem eingangsseitigen und an einem ausgangsseitigen Abschnitt derselben, erstrecken sich zwei Schwingungs-Sensoren 14, 16, über deren Längenänderung mechanische Schwingungen der beiden Messrohre A und B erfassbar sind. In dem vorliegenden Ausführungsbeispiel ist durch die beiden Schwingungs-Sensoren 14, 16 jeweils die Abstandsänderung zwischen den beiden Messrohren A, B, d.h. deren kombinierte Amplitude, erfassbar. Die Schwingungs-Sensoren 14, 16 werden beispielsweise durch elektrodynamische Schwingungs-Sensoren gebildet. Die Auswertung der von den Schwingungs-Sensoren 14, 16 bereitgestellten Messsignale sowie die Ansteuerung des Erregers 8 erfolgt durch eine entsprechend ausgebildete Elektronik 18, die lediglich in Fig. 2 schematisch durch eine Box dargestellt ist. Die Ansteuerung des Erregers 8 durch die Elektronik 18 ist in Fig. 2 schematisch durch den Pfeil 24 dargestellt, während die Bereitstellung der Messsignale durch die Schwingungs-Sensoren 14, 16 an die Elektronik 18 in Fig. 2 schematisch durch die Pfeile 26, 28 dargestellt ist.

Im Einsatz ist durch das Coriolis-Durchflussmessgerät 2 ein Massedurchfluss des in der jeweiligen Rohrleitung strömenden Mediums bestimmbar. Bei der vorliegenden Ausführungsform des Coriolis-Durchflussmessgerätes 2 wird durch die beiden Schwingungs-Sensoren 14, 16 jeweils eingangsseitig und ausgangsseitig der (bei Schwingungen zeitlich variierende) Abstand zwischen den beiden Messrohren A, B erfasst. Aufgrund der auf das strömende Medium wirkenden Coriolis-Kraft tritt entlang der Erstreckungsrichtung der Messrohre A, B eine Phasenverschiebung auf. Diese Phasenverschiebung wird dadurch, dass die Schwingungs-Sensoren 14, 16 eingangsseitig und ausgangsseitig angeordnet sind, durch die Schwingungs-Sensoren 14, 16 erfasst. Aus der erfassten Phasenverschiebung kann dann durch die Elektronik 18 der Gesamt-Massedurchfluss des Mediums durch das Coriolis-Durchflussmessgerät 2 ermittelt werden. Das Coriolis-Durchflussmessgerät 2 ist derart ausgebildet, dass durch dieses auch eine Dichte sowie eine Viskosität des strömenden Mediums bestimmbar sind.

Bei hochviskosen und/oder zur Ansatzbildung neigenden Medien kann der Fall auftreten, dass eines der Messrohre A, B vollständig oder teilweise verstopft ist. Solange durch das verbleibende Messrohr A bzw. B noch ein (dementsprechend erhöhter) Durchfluss möglich ist, ist eine Verstopfung eines Messrohres A bzw. B im Rahmen der Coriolis-Massedurchflussmessung des Gesamt-Massedurchflusses nicht erkennbar. Um das erfindungsgemäße Detektionsverfahren zur Detektion einer Verstopfung eines Messrohres A, B durchführen zu können, wird zusätzlich zu dem Gesamt-Massedurchfluss durch das Coriolis-Durchflussmessgerät 2 auch eine in einem der Messrohre auftretende Teilmengen-Strömung gemessen. Das dargestellte Coriolis-Durchflussmessgerät 2 ist im Wesentlichen spiegelsymmetrisch zu einer zwischen den beiden Messrohren A, B verlaufenden Symmetrieebene ausgebildet. Insbesondere die beiden Messrohre A, B sind spiegelsymmetrisch zueinander relativ zu dieser Symmetrieebene ausgebildet. Sie weisen jeweils den gleichen, freien Strömungsquerschnitt auf. Dementsprechend verteilt sich bei einer freien, d.h. unverstopften Messrohranordnung die Strömung gleichmäßig (d.h. im Verhältnis 1:1) auf die beiden Messrohre A, B. Ist eines der Messrohre A, B (vollständig oder teilweise) verstopft, so ist der Durchfluss durch das verstopfte Messrohr gegenüber dem Durchfluss durch das unverstopfte Messrohr reduziert. Solch eine von der zu erwartenden Strömungsverteilung abweichende Strömungsverteilung kann durch Messen der in einem der Messrohre A, B auftretenden Teilmengen-Strömung festgestellt werden.

Nachfolgend werden verschiedene Ausführungsformen der Erfindung, bei denen insbesondere unterschiedliche Messverfahren zur Messung solch einer Teilmengen-Strömung eingesetzt werden, beispielhaft erläutert.

Gemäß einer Ausführungsform wird bei einem Messrohr, bei der vorliegenden Ausführungsform bei dem Messrohr A, eine Coriolis-Massedurchflussmessung des Massedurchflusses durch dieses Messrohr A durchgeführt. Dementsprechend wird als Teilmengen-Strömung ein Massedurchfluss des Mediums durch diese Teilmenge der Messrohre gemessen. Bei der vorliegenden Ausführungsform sind hierfür an diesem Messrohr A jeweils ein Erreger 30 sowie eingangsseitig und ausgangsseitig jeweils Schwingungs-Sensoren 32, 34 vorgesehen. Der Erreger 30 stützt sich dabei zu der anderen Seite an einem (in Fig. 1 teilweise abgenommen dargestellten) Gehäusebauteil 36 ab. Auch die beiden Schwingungs-Sensoren 32, 34 messen jeweils den Abstand zwischen dem Messrohr A und dem Gehäusebauteil 36. Entsprechend wie dies oberhalb in Bezug auf den Erreger 8 und die beiden Schwingungs-Sensoren 14, 16 erläutert wurde, wird auch der Erreger 30 durch die Elektronik 18 angesteuert und die Messsignale der beiden Schwingungs-Sensoren 32, 34 werden durch die Elektronik 18 ausgewertet. Während der Durchführung der Coriolis-Massedurchflussmessung des Massedurchflusses durch das Messrohr A wird bei der vorliegenden Ausführungsform nur das Messrohr A durch den Erreger 30 zu Schwingungen angeregt, während der Erreger 8 nicht aktiviert ist.

Bei der vorliegenden Ausführungsform wird der Teilmengen-Strömungswert durch den durch die Coriolis-Massedurchflussmessung (mit der aus Erreger 30 und Schwingungs-Sensoren 32, 34 gebildeten Messanordnung) bestimmten Massedurchfluss durch das Messrohr A gebildet. Der zu erwartende Referenzwert wird durch die Hälfte des aus dem im Rahmen der Coriolis-Massedurchflussmessung (mit der aus Erreger 8 und Schwingungs-Sensoren 14, 16 gebildeten Messanordnung) bestimmten Gesamt-Massedurchflusses des Mediums durch das Coriolis-Durchflussmessgerät 2 gebildet. Der Teilmengen-Strömungswert und der zu erwartende Referenzwert werden durch die Elektronik 18 aus den jeweiligen Messwerten bestimmt und miteinander verglichen. Weicht der Teilmengen-Strömungswert signifikant, insbesondere um mehr als einen vorbestimmten Grenzwert, von dem zu erwartenden Referenzwert ab, so wird eine Verstopfung eines Messrohres detektiert. Durch die Elektronik 18 wird ferner anhand der Richtung der Abweichung des Teilmengen-Strömungswertes von dem zu erwartenden Referenzwert bestimmt, welches der Messrohre A, B verstopft ist. Wird eine Verstopfung eines Messrohres detektiert, so wird dies einem Benutzer über eine, an dem Coriolis-Durchflussmessgerät 2 vorgesehene (in den Figuren nicht dargestellte) Vorort-Anzeige signalisiert. Ferner wird eine, mit dem Coriolis-Durchflussmessgerät 2 in Kommunikationsverbindung stehende (nicht dargestellte) Steuereinheit darüber informiert.

Nachfolgend werden weitere Ausführungsformen der Erfindung erläutert, wobei vorwiegend auf die Unterschiede gegenüber der oberhalb erläuterten, ersten Ausführungsform eingegangen wird. Bei der zweiten Ausführungsform wird parallel zu der Coriolis-Massedurchflussmessung des Gesamt-Massedurchflusses (mit der aus Erreger 8 und Schwingungs-Sensoren 14, 16 gebildeten Messanordnung) die Zeit erfasst, über welche eine, ein Messrohr passierende, lokalisierte Verunreinigung eine Störung in einem, durch das Coriolis-Durchflussmessgerät 2 erfassten Messsignal hervorruft. Die in Fig. 1 dargestellte, aus Erreger 30 und Schwingungs-Sensoren 32, 34 gebildete Messanordnung zur Bestimmung des Massedurchflusses durch ein Messrohr ist bei der zweiten Ausführungsform nicht erforderlich. Bei der zweiten Ausführungsform wird der Effekt ausgenützt, dass in dem Fall, in dem ein Messrohr verstopft ist, die Strömungsgeschwindigkeit in dem verbleibenden Messrohr erhöht ist und damit eine lokalisierte Verunreinigung schneller durch das verbleibende Messrohr hindurchtritt.

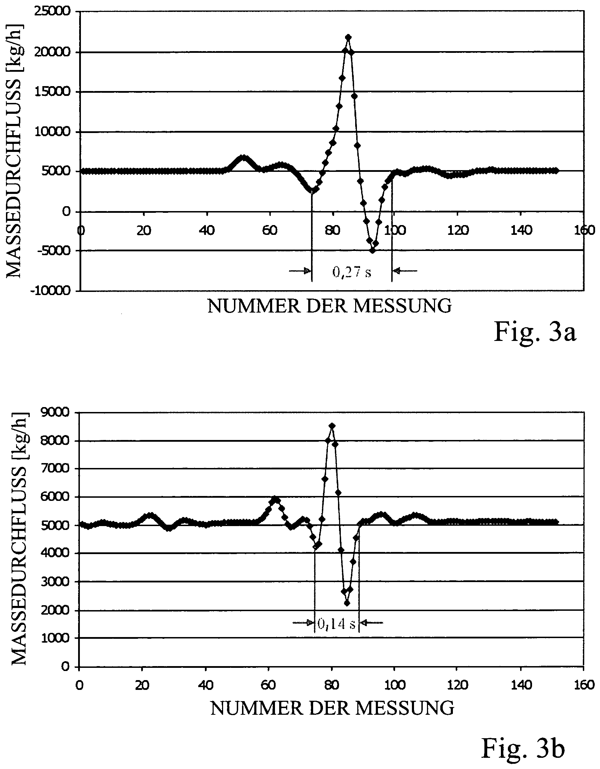

Dieser Effekt ist anhand der Fig. 3a und 3b ersichtlich. In den Fig. 3a und 3b ist jeweils ein in dem Coriolis-Durchflussmessgerät 2 (mit der aus Erreger 8 und Schwingungs-Sensoren 14, 16 gebildeten Messanordnung) bestimmter Gesamt-Massedurchfluss (bzw. Gesamt-Massedurchflussrate) über der Zeit aufgetragen. Dabei sind entlang der x-Achse die einzelnen, in gleichen Zeitabständen erfassten Messpunkte aufgetragen, während entlang der y-Achse der bestimmte Gesamt-Massedurchfluss in der Einheit kg/h (Kilogramm/Stunde) aufgetragen ist. Bei der für die Messungen der Fig. 3a und 3b verwendeten Versuchsanordnung wurde als strömendes Medium Wasser eingesetzt, das in der betreffenden Rohrleitung mit einem Gesamt-Massedurchfluss von 5.000 kg/h strömte. Die lokalisierte Verunreinigung wird jeweils durch eine Luftblase gebildet, die in dem strömenden Medium (hier: Wasser) mitgeführt wird und die eines der Messrohre passiert. Wie anhand der Figuren 3a und 3b ersichtlich ist, verursacht die lokalisierte Verunreinigung bei Passieren des Messrohres - abgesehen von im Voraus und im Nachhinein auftretenden, geringfügigen Störungen - zunächst einen signifikanten Anstieg des Gesamt-Massedurchfluss-Messsignals, anschließend einen signifikanten Abfall bis deutlich unterhalb des tatsächlichen Gesamt-Massedurchflusswertes (von im Wesentlichen 5.000 kg/h) und anschließend wieder einen Anstieg bis zum Erreichen des tatsächlichen Gesamt-Massedurchflusswertes (von im Wesentlichen 5.000 kg/h). Dieser Kurvenverlauf des Gesamt-Massedurchfluss-Messsignals ist charakteristisch für das Passieren einer lokalisierten Verunreinigung durch ein Messrohr, insbesondere einer lokalisierten Verunreinigung, die eine geringere Dichte als das strömende Medium aufweist. Dabei entspricht der Kurvenabschnitt des Gesamt-Massedurchfluss-Messsignals oberhalb des tatsächlichen Gesamt-Massedurchflusswertes (von 5.000 kg/h) der Zeitdauer, in der die lokalisierte Verunreinigung die erste Hälfte des Messrohres (d.h. im Wesentlichen von einem Einlass des Messrohres bis zum Erreichen der Position des Erregers 8) passiert. Der Kurvenabschnitt des Gesamt-Massedurchfluss-Messsignals unterhalb des tatsächlichen Gesamt-Massedurchflusswertes (von 5.000 kg/h) entspricht der Zeitdauer, in der die lokalisierte Verunreinigung die zweite Hälfte des Messrohres (d.h. im Wesentlichen von der Position des Erregers 8 bis zum Erreichen eines Auslasses des Messrohres) passiert.

Die Zeitdauer von dem Beginn des signifikanten Anstiegs des Gesamt-Massedurchfluss-Messsignals über den signifikanten Abfall bis zum Erreichen des ursprünglichen Wertes des Gesamt-Massedurchfluss-Messsignals wird bei der vorliegenden Ausführungsform als Zeit herangezogen, über welche eine, ein Messrohr passierende, lokalisierte Verunreinigung eine Störung in einem, durch das Coriolis-Durchflussmessgerät 2 erfassten Messsignal (hier: dem Gesamt-Massedurchfluss-Messsignal) hervorruft. Bei der für die Fig. 3a verwendeten Versuchsanordnung war der Strömungsquerschnitt sämtlicher Messrohre frei. Die gemessene Zeitdauer betrug in diesem Fall 0,27 Sekunden, wie in Fig. 3a schematisch dargestellt ist. Bei der für die Fig. 3b verwendeten Versuchsanordnung wurde ein Messrohr vollständig durch einen Gummistopfen verstopft. Dementsprechend war die Strömungsgeschwindigkeit in dem verbleibenden Messrohr deutlich erhöht, was zu einer deutlich kürzeren Zeit, die eine lokalisierte Verunreinigung (hier: die Luftblase) für das Passieren des Messrohres benötigt, führt. Vorliegend wurde eine Zeitdauer von 0,14 Sekunden gemessen.

Vorzugsweise werden bei Anwendung der zweiten Ausführungsform zunächst in einer Versuchsanordnung mit dem betreffenden Medium (hier: Wasser) für verschiedene Gesamt-Massedurchflusswerte entsprechende Zeitdauern bestimmt, über welche eine, ein Messrohr passierende lokalisierte Verunreinigung (hier: eine Luftblase) eine Störung in einem, durch das Coriolis-Durchflussmessgerät erfassten Messsignal bei vollständig freier Messrohranordnung hervorruft. Diese Zeitdauern werden (zusammen mit dem zugehörigen Gesamt-Massedurchflusswert) in einem (in den Figuren nicht dargestellten) Speicher des Coriolis-Durchflussmessgerätes 2 hinterlegt.

Im Einsatz wird in dem Coriolis-Durchflussmessgerät 2 das Messsignal (hier: das Gesamt-Massedurchfluss-Messsignal) auf das Auftreten einer, durch eine lokalisierte Verunreinigung hervorgerufene Störung überwacht. Wird solch eine Störung festgestellt, so wird, wie oberhalb beschrieben ist, die Zeit erfasst, über welche die lokaliserte Verunreinigung bei Passieren eines Messrohres eine Störung in dem Messsignal hervorruft. Diese Zeitdauer wird als Teilmengen-Strömungswert herangezogen. Ferner wird basierend auf der in dem Coriolis-Durchflussmessgerät 2 parallel durchgeführten Coriolis-Massedurchflussmessung des Gesamt-Massedurchflusses die hinterlegte Zeitdauer, die dem gemessenen Gesamt-Massedurchflusswert entspricht, als zu erwartender Referenzwert herangezogen. Der Teilmengen-Strömungswert und der zu erwartende Referenzwert werden dabei durch die Elektronik 18 bestimmt und miteinander verglichen. Dieser Vergleich und die weiteren Schritte erfolgen entsprechend, wie dies oberhalb in Bezug auf die erste Ausführungsform erläutert wurde. Im Unterschied zu der ersten Ausführungsform kann bei dem Verfahren gemäß der zweiten Ausführungsform nicht ohne weiteres festgestellt werden, welches der Messrohre A, B verstopft ist. Denn anhand des Messsignals kann in der Regel nicht erkannt werden, durch welches Messrohr die lokalisierte Verunreinigung passiert.

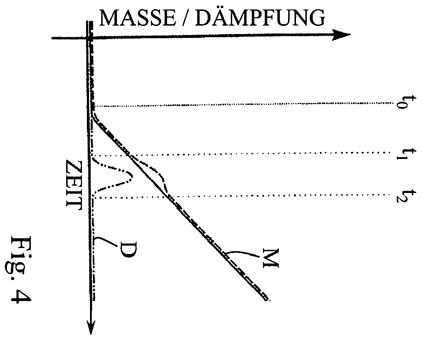

Alternativ zu dem Gesamt-Massedurchfluss-Messsignal können auch andere, in dem Coriolis-Durchflussmessgerät 2 gemessene und/oder verarbeitete Messsignale zur Bestimmung der Zeitdauer, über welche eine, ein Messrohr passierende, lokalisierte Verunreinigung eine Störung in dem betreffenden Messsignal hervorruft, herangezogen werden. Dies ist schematisch anhand der Fig. 4 dargestellt. In der Fig. 4 ist schematisch in gestrichelter Linie eine über die Zeit aufintegrierte Masse über der Zeit aufgetragen (vgl. mit "M" bezeichneter Graph in Fig. 4). Die aufintegrierte Masse wird in Coriolis-Durchflussmessgeräten oftmals zur Befüllung von Bechern, Behältern, etc. berechnet. Ferner ist in Fig. 4 in strich-punktierter Linie eine Dämpfung über der Zeit aufgetragen (vgl. mit "D" bezeichneter Graph in Fig. 4). Beide Messsignale können dabei beispielsweise durch ein Coriolis-Durchflussmessgerät 2, wie es in den Fig. 1 und 2 dargestellt ist, gemessen bzw. bearbeitet werden. Für beide Messsignale ist jeweils in durchgezogener Linie ein erwartungsgemäßer Verlauf dargestellt. In der Zeitdauer von t₁ bis t₂ passiert eine lokalisierte Verunreinigung, insbesondere eine Luftblase, ein Messrohr. Wie anhand der Fig. 4 ersichtlich ist, ist dies in dem Kurvenverlauf der beiden Messsignale anhand des Peaks in diesem Bereich erkennbar. Dementsprechend kann zur Bestimmung der Zeitdauer, welche eine lokalisierte Verunreinigung zum Passieren eines Messrohres benötigt, die Zeitdauer der Erhöhung des Messsignals (vgl. gestrichelte bzw. strich-punktierte Linienverlauf zwischen den Zeiten t₁ und t₂) gegenüber dem erwartungsgemäßen Verlauf des Messsignals (vgl. durchgezogenen Linienverlauf zwischen den Zeiten t₁ und t₂) gemessen werden. Diese Zeitdauer kann dann in dem Coriolis-Durchflussmessgerät 2 in entsprechender Weise, wie dies oberhalb in Bezug auf das Gesamt-Massedurchfluss-Messsignal erläutert wurde, verwertet werden.

Die vorliegende Erfindung ist nicht auf die unter Bezugnahme auf die Figuren erläuterten Ausführungsbeispiele beschränkt. Insbesondere können alternativ oder zusätzlich zu den oberhalb beschriebenen Alternativen auch weitere Messverfahren und gegebenenfalls Messanordnungen eingesetzt werden, um die in einer Teilmenge der Messrohre auftretende Teilmengen-Strömung zu messen.

## Patentansprüche

1. Verfahren zum Detektieren einer vollständigen oder teilweisen Verstopfung eines Messrohres (A; B) eines Coriolis-Durchflussmessgerätes (2), das in eine Rohrleitung einsetzbar ist und das einen Messwandler vom Vibrationstyp mit mindestens zwei strömungstechnisch parallel geschalteten Messrohren (A, B) aufweist, wobei das Coriolis-Durchflussmessgerät (2) von Medium durchströmt wird und wobei durch das Coriolis-Durchflussmessgerät (2) im Rahmen einer Coriolis-Massedurchflussmessung ein Gesamt-Massedurchfluss des Mediums durch das Coriolis-Durchflussmessgerät (2) bestimmt wird, **gekennzeichnet durch** nachfolgende Schritte:
A) Messen einer in einer Teilmenge der Messrohre (A, B) auftretenden Teilmengen-Strömung;
B) Vergleichen eines aus dieser Messung erhaltenen Teilmengen-Strömungswertes mit einem für diese Teilmenge zu erwartenden Referenzwert, der aus dem im Rahmen der Coriolis-Massedurchflussmessung bestimmten Gesamt-Massedurchfluss bestimmt wird; und
C) Detektieren einer Verstopfung mindestens eines Messrohres (A; B) des Messwandlers, falls der Teilmengen-Strömungswert um mehr als einen Grenzwert von dem Referenzwert abweicht.

2. Verfahren gemäß Anspruch 1, **dadurch gekennzeichnet, dass** die Teilmenge der Messrohre (A, B) durch genau ein Messrohr (A; B) gebildet wird.

3. Verfahren gemäß Anspruch 1 oder 2, **gekennzeichnet durch** nachfolgende(n) Schritt(e):
D) Detektieren einer Verstopfung innerhalb der Teilmenge der Messrohre (A, B), wenn der Teilmengen-Strömungswert von dem Referenzwert derart abweicht, dass in der Teilmenge eine reduzierte Teilmengen-Strömung vorliegt; und/oder
E) Detektieren einer Verstopfung mindestens eines, in der Teilmenge der Messrohre (A, B) nicht enthaltenen Messrohres (A; B) des Coriolis-Durchflussmessgerätes, wenn der Teilmengen-Strömungswert von dem Referenzwert derart abweicht, dass in der Teilmenge eine erhöhte Teilmengen-Strömung vorliegt.

4. Verfahren gemäß einem der vorangehenden Ansprüche, **dadurch gekennzeichnet, dass** bei dem Schritt des Messens eine Strömungsgeschwindigkeit des Mediums in der Teilmenge der Messrohre (A, B) erfasst wird.

5. Verfahren gemäß einem der vorangehenden Ansprüche, **dadurch gekennzeichnet, dass** bei dem Schritt des Messens die Zeit erfasst wird, über welche eine, ein Messrohr (A; B) passierende, lokalisierte Verunreinigung eine Störung in einem, durch das Coriolis-Durchflussmessgerät (2) erfassten Messsignal hervorruft.

6. Verfahren gemäß Anspruch 5, **dadurch gekennzeichnet, dass** in dem Coriolis-Durchflussmessgerät (2) für verschiedene Gesamt-Massedurchflusswerte entsprechende Zeitdauern hinterlegt sind, über welche eine, ein Messrohr (A; B) passierende, lokalisierte Verunreinigung eine Störung in einem, durch das Coriolis-Durchflussmessgerät (2) erfassten Messsignal bei vollständig freier Messrohranordnung hervorruft, wobei bei dem Schritt des Vergleichens die hinterlegte Zeitdauer, die dem durch das Coriolis-Durchflussmessgerät (2) bestimmten Gesamt-Massedurchfluss des Mediums entspricht, als zu erwartender Referenzwert verwendet wird.

7. Verfahren gemäß einem der vorangehenden Ansprüche, **dadurch gekennzeichnet, dass** bei dem Schritt des Messens bei einer Teilmenge der Messrohre (A, B) eine Coriolis-Massedurchflussmessung durchgeführt wird und als Teilmengen-Strömung ein Massedurchfluss des Mediums durch diese Teilmenge der Messrohre (A, B) gemessen wird.

8. Verfahren gemäß einem der vorangehenden Ansprüche, **dadurch gekennzeichnet, dass** bei dem Schritt des Messens durch ein Ultraschall-Messverfahren innerhalb von mindestens einem Messrohr (A; B) die Strömungsgeschwindigkeit des Mediums gemessen wird.

9. Verfahren gemäß einem der vorangehenden Ansprüche, **dadurch gekennzeichnet, dass** die Schritte des Messens, des Vergleichens und des Detektierens in dem Coriolis-Durchflussmessgerät (2) durchgeführt werden.

10. Verfahren gemäß einem der vorangehenden Ansprüche, **dadurch gekennzeichnet, dass** die Schritte des Messens, des Vergleichens und des Detektierens parallel zu einer in dem Coriolis-Durchflussmessgerät (2) durchgeführten Durchflussmessung des Gesamtdurchflusses des Mediums durch das Coriolis-Durchflussmessgerät (2) durchgeführt werden.

11. Verfahren gemäß einem der vorangehenden Ansprüche, **dadurch gekennzeichnet, dass** in dem Fall, in dem eine Verstopfung mindestens eines Messrohres (A; B) des Messwandlers detektiert wird, diese Verstopfung an einen Benutzer und/oder an eine mit dem Coriolis-Durchflussmessgerät (2) in Kommunikationsverbindung stehende Steuereinheit signalisiert wird.

12. Coriolis-Durchflussmessgerät, das in eine Rohrleitung einsetzbar ist, das einen Messwandler vom Vibrationstyp mit mindestens zwei strömungstechnisch parallel geschalteten Messrohren (A, B) aufweist und das derart ausgebildet ist, dass durch dieses im Rahmen einer Coriolis-Massedurchflussmessung ein Gesamt-Massedurchfluss eines, in der Rohrleitung strömenden Mediums bestimmbar ist, **dadurch gekennzeichnet,**
**dass** durch das Coriolis-Durchflussmessgerät (2) eine in einer Teilmenge der Messrohre (A, B) auftretende Teilmengen-Strömung messbar ist und dass eine Elektronik (18) des Coriolis-Durchflussmessgerätes (2) derart ausgebildet ist, dass durch die Elektronik (18) ein aus dieser Messung erhaltener Teilmengen-Strömungswert mit einem für diese Teilmenge zu erwartenden Referenzwert, der aus dem über die Coriolis-Durchflussmessung bestimmten Gesamt-Massedurchfluss bestimmt wird, vergleichbar ist und dass durch die Elektronik eine Verstopfung mindestens eines Messrohres (A; B) des Messwandlers detektierbar ist, falls der Teilmengen-Strömungswert um mehr als einen Grenzwert von dem Referenzwert abweicht.

13. Coriolis-Durchflussmessgerät gemäß Anspruch 12, **dadurch gekennzeichnet, dass** dieses neben einem Coriolis-Massedurchflussmesssystem (8, 14, 16) zur Messung des Gesamt-Massedurchflusses des in der Rohrleitung strömenden Mediums ein zweites Messsystem (30, 32, 34) zum Messen der in der Teilmenge der Messrohre (A, B) auftretenden Teilmengen-Strömung aufweist.

14. Coriolis-Durchflussmessgerät gemäß Anspruch 13, **dadurch gekennzeichnet, dass** das zweite Messsystem mindestens eines der nachfolgenden Messsysteme aufweist:
ein Coriolis-Massedurchflussmesssystem (30, 32, 34) zur Messung des Massedurchflusses des Mediums in der Teilmenge der Messrohre (A, B); und/oder
ein Ultraschall-Messsystem zur Messung der Strömungsgeschwindigkeit des Mediums innerhalb eines Messrohres (A; B).

## Claims

1. Procedure to detect a complete or partial blockage of a measuring tube (A, B) of a Coriolis flowmeter (2), which can be inserted into a pipe and which features a vibronic-type transducer with at least two measuring tubes (A, B) switched in parallel in terms of flow, wherein medium flows through the Coriolis flowmeter (2) and wherein a total mass flow of the medium through the Coriolis flowmeter (2) is determined by the Coriolis flowmeter (2) as part of a Coriolis mass flow measurement, wherein said procedure is **characterized by** the following steps:
A) Measurement of a partial flow occurring in a subsection of the measuring tubes (A, B);
B) Comparison of a value for the partial flow, resulting from this measurement, with a reference value to be expected for this subsection, wherein said reference value is determined from the total mass flow determined as part of the Coriolis mass flow measurement; and
C) Detection of a blockage of at least one of the measuring tubes (A, B) of the transducer if the value of the partial flow deviates from the reference value by more than a limit value.

2. Procedure as claimed in Claim 1, **characterized in that** the subsection of the measuring tubes (A, B) is formed by precisely one measuring tube (A, B).

3. Procedure as claimed in Claim 1 or 2, **characterized by** the following steps:
D) Detection of a blockage in a subsection of the measuring tubes (A, B) if the value of the partial flow deviates from the reference value to such an extent that a reduced partial flow is present in the subsection; and/or
E) Detection of a blockage of at least one measuring tube (A; B) of the Coriolis flowmeter that is not part of the subsection of the measuring tubes (A, B) if the value of the partial flow deviates from the reference value to such an extent that a higher partial flow is present in the subsection.

4. Procedure as claimed in one of the previous claims, **characterized in that** - during the measurement step - a flow velocity of the medium in the subsection of the measuring tubes (A, B) is measured.

5. Procedure as claimed in one of the previous claims, **characterized in that** - during the measurement step - the time is measured during which a localized contamination passing through a measuring tube (A, B) causes an interference in a measuring signal determined by the Coriolis flowmeter (2).

6. Procedure as claimed in Claim 5, **characterized in that** corresponding time durations are saved in the Coriolis flowmeter (2) for various total mass flow measured values during which a localized contamination passing through a measuring tube (A, B) causes an interference in a measuring signal determined by the Coriolis flowmeter (2) when the measuring tube arrangement is completely free wherein - during the comparison step - the saved time duration which corresponds to the total mass flow of the medium determined by the Coriolis flowmeter (2) is used as the reference value to be expected.

7. Procedure as claimed in one of the previous claims, **characterized in that** - during the measurement step - a Coriolis mass flow measurement is performed for a subsection of the measuring tubes (A, B) and **in that** a mass flow of the medium through this subsection of the measuring tubes (A, B) is measured as the partial flow.

8. Procedure as claimed in one of the previous claims, **characterized in that** - during the measurement step - the flow velocity of the medium is measured by an ultrasonic measuring procedure in at least one measuring tube (A, B).

9. Procedure as claimed in one of the previous claims, **characterized in that** the measurement, comparison and detection steps are performed in the Coriolis flowmeter (2).

10. Procedure as claimed in one of the previous claims, **characterized in that** the measurement, comparison and detection steps are performed in parallel to a flow measurement of the total flow of the medium through the Coriolis flowmeter (2), which is performed in the Coriolis flowmeter (2).

11. Procedure as claimed in one of the previous claims, **characterized in that** in the event that a blockage of at least one measuring tube (A, B) of the transducer is detected, this blockage is signaled to a user and/or a control unit communicating with the Coriolis flowmeter (2).

12. Coriolis flowmeter (2), which can be inserted into a pipe, features a vibronic-type transducer with at least two measuring tubes (A, B) switched in parallel in terms of flow and is designed in such a way that it can determine a total mass flow of a medium flowing through the pipe as part of a Coriolis mass flow measurement, **characterized in that**
a partial flow occurring in a subsection of the measuring tubes (A, B) can be measured by the Coriolis flowmeter (2) and **in that** electronics (18) of the Coriolis flowmeter (2) are designed in such a way that a value of the partial flow obtained from this measurement can be compared by the electronics (18) with a reference value tube expected for this subsection, said reference value being determined from the total mass flow determined via the Coriolis flow measurement, and **in that** a blockage of at least one measuring tube (A, B) of the transducer can be detected by the electronics if the value of the partial flow deviates from the reference value by more than a limit value.

13. Coriolis flowmeter as claimed in Claim 12, **characterized in that** this flowmeter comprises a second measuring system (30, 32, 34) to measure the partial flow occurring in the subsection of the measuring tubes (A, B) in addition to a Coriolis mass flow system (8, 14, 16) to measure the total mass flow of the medium flowing through the pipe.

14. Coriolis flowmeter as claimed in Claim 13, **characterized in that** the second measuring system features at least one of the following measuring systems:
a Coriolis mass flow measuring system (30, 32, 34) designed to measure the mass flow of the medium in the subsection of the measuring tubes (A, B); and/or
an ultrasonic measuring system designed to measure the flow velocity of the medium in a measuring tube (A, B).

## Revendications

1. Procédé destiné à la détection d'un colmatage total ou partiel d'un tube de mesure (A, B) d'un débitmètre Coriolis (2) pouvant être inséré dans une conduite et comportant un transducteur du type à vibration avec au moins deux tubes de mesure (A, B) couplés parallèlement en terme d'écoulement, le débitmètre Coriolis (2) étant parcouru par le produit et un débit massique total du produit étant déterminé par le débitmètre Coriolis (2) dans le cadre d'une mesure de débit Coriolis, lequel procédé est **caractérisé par** les étapes suivantes :
A) Mesure d'un débit partiel intervenant dans une partie des tubes de mesure (A, B) ;
B) Comparaison d'une valeur de débit partiel, résultant de cette mesure, avec une valeur de référence escomptée pour cette partie, laquelle valeur de référence est déterminée à partir du débit massique total déterminé dans le cadre de la mesure Coriolis ; et
C) Détection d'un colmatage d'au moins l'un des tubes de mesure (A, B) du transducteur, au cas où la valeur de débit partiel diffère de plus d'un seuil par rapport à la valeur de référence.

2. Procédé selon la revendication 1, **caractérisé en ce que** la partie des tubes de mesure (A, B) est formée par exactement un tube de mesure (A, B).

3. Procédé selon la revendication 1 ou 2, **caractérisé par** l'/les étape(s) suivante(s) :
D) Détection d'un colmatage au sein de la partie des tubes de mesure (A, B) lorsque la valeur de débit partiel diffère de la valeur de référence de telle sorte qu'un débit partiel réduit est présent dans la partie ; et/ou
E) Détection d'un colmatage d'au moins un tube de mesure (A, B) du débitmètre Coriolis, lequel tube n'est pas contenu dans la partie des tubes de mesure (A, B), lorsque la valeur de débit partiel diffère de la valeur de référence de telle sorte qu'un débit partiel augmenté est présent dans la partie.

4. Procédé selon l'une des revendications précédentes, **caractérisé en ce qu'**est déterminée, lors de l'étape de mesure, une vitesse d'écoulement du produit dans la partie des tubes de mesure (A, B)

5. Procédé selon l'une des revendications précédentes, **caractérisé en ce qu'**est mesuré, lors de l'étape de mesure, le temps pendant lequel une contamination localisée, traversant un tube de mesure (A, B), donne lieu à un défaut dans un signal de mesure déterminé par le débitmètre Coriolis.

6. Procédé selon la revendication 5, **caractérisé en ce que** sont enregistrées, dans le débitmètre Coriolis (2) des durées correspondant à différentes valeurs de débit massique total, durées pendant lesquelles une contamination localisée, traversant un tube de mesure (A, B), donne lieu à un défaut dans un signal de mesure déterminé par le débitmètre Coriolis (2) en cas d'arrangement de tubes de mesure entièrement dégagé, la durée enregistrée, qui correspond au débit massique total du produit déterminé par le débitmètre Coriolis (2), étant utilisée dans l'étape de comparaison en tant que valeur de référence escomptée.

7. Procédé selon l'une des revendications précédentes, **caractérisé en ce qu'**est effectuée, dans l'étape de mesure, une mesure de débit massique Coriolis pour une partie des tubes de mesure (A, B) et **en ce qu'**un débit massique du produit traversant cette partie des tubes de mesure (A, B) est mesuré en tant que débit partiel.

8. Procédé selon l'une des revendications précédentes, **caractérisé en ce qu'**est mesurée, dans l'étape de mesure, la vitesse d'écoulement du produit à l'intérieur d'au moins un tube de mesure (A, B) à l'aide d'une méthode de mesure à ultrasons.

9. Procédé selon l'une des revendications précédentes, **caractérisé en ce que** les étapes de mesure, de comparaison et de détection sont réalisées dans le débitmètre Coriolis (2).

10. Procédé selon l'une des revendications précédentes, **caractérisé en ce que** les étapes de mesure, de comparaison et de détection sont effectuées parallèlement à une mesure, laquelle est effectuée dans le débitmètre Coriolis (2), du débit total du produit à travers le débitmètre Coriolis (2).

11. Procédé selon l'une des revendications précédentes, **caractérisé en ce que**, dans le cas où un colmatage d'au moins l'un des tubes de mesure (A, B) du transducteur est détecté, ce colmatage est signalé à un utilisateur et/ou à une unité de commande qui est en liaison de communication avec le débitmètre Coriolis (2).

12. Débitmètre Coriolis pouvant être inséré dans une conduite, lequel présente un transducteur du type à vibration avec au moins deux tubes de mesure (A, B) couplés parallèlement en terme d'écoulement, et est conçu de telle sorte à permettre la détermination, dans le cadre d'une mesure de débit de Coriolis, d'un débit massique total d'un produit s'écoulant dans la conduite,
**caractérisé**
**en ce que** le débitmètre Coriolis (2) permet de mesurer un débit partiel intervenant dans une partie des tubes de mesure (A, B) et **en ce que** l'électronique (18) permet de comparer une valeur de débit partiel obtenue de cette mesure avec une valeur de référence escomptée pour cette partie, laquelle valeur de référence est déterminée à partir du débit massique total déterminé au moyen de la mesure de débit Coriolis, et **en ce que** l'électronique permet de détecter un colmatage d'au moins un tube de mesure (A, B) du transducteur au cas où la valeur de débit partiel diffère de plus d'un seuil par rapport à la valeur de référence.

13. Débitmètre Coriolis selon la revendication 12, **caractérisé en ce que** celui-ci comprend, outre un système de mesure de débit Coriolis (8, 14, 16) destiné à la mesure du débit massique total du produit s'écoulant dans la conduite, un deuxième système de mesure (30, 32, 34) destiné à la mesure du débit partiel intervenant dans la partie des tubes de mesure (A, B).

14. Débitmètre Coriolis selon la revendication 13, **caractérisé en ce que** le deuxième système de mesure comprend au moins l'un des systèmes de mesure suivants :
un système de mesure de débit Coriolis (30, 32, 34) destiné à la mesure du débit massique du produit dans la partie des tubes de mesure (A, B) ; et/ou
un système de mesure à ultrasons destiné à la mesure de la vitesse d'écoulement du produit à l'intérieur d'un tube de mesure (A, B).
